# FASCICULE DE BREVET EUROPEEN

(11) **EP 1 427 072 B1**
(45) Date de publication et mention de la délivrance du brevet: **30.04.2008**
(21) Numéro de dépôt: 03292956.4
(22) Date de dépôt: 27.11.2003
(51) Int. Cl.: H01R 35/02, B60R 16/02

(54) **Contacteur électrique tournant perfectionné et ensemble de direction de véhicule automobile muni de ce contacteur**
Verbesserter elektrischer Drehkontaktor und Fahrzeuglenksäulenzusammenbau mit einem solchen Kontaktor
Improved electrical rotating contactor and vehicle steering column assembly having such a contactor

(30) Priorité: 04.12.2002 FR 0215293
(43) Date de publication de la demande: 09.06.2004
(73) Titulaire: VALEO ELECTRONIQUE, 94000 Creteil (FR)
(72) Inventeur: Letoumelin, Remi, 77400 Lagny-sur-Marne (FR)
(74) Mandataire: de la Bigne, Guillaume Michel Marie

(56) Documents cités:
- EP-A- 1 063 132
- FR-A- 2 772 195
- US-A- 5 980 287
- US-A1- 2002 019 150

## Description

La présente invention concerne un contacteur électrique tournant perfectionné et un ensemble de direction de véhicule automobile muni de ce contacteur.

On connaît déjà dans l'état de la technique un contacteur électrique tournant, du type comprenant :
- un rotor et
- un premier connecteur souple destiné à s'enrouler sur le rotor.

Habituellement, un contacteur électrique du type précité pour ensemble de direction de véhicule automobile comprend deux parties coaxiales, dites fixe et mobile, montées rotatives l'une par rapport à l'autre autour d'un axe de rotation relatif. Ces deux parties coaxiales forment un boîtier dans lequel sont logés le rotor et le connecteur. La partie fixe du contacteur est solidaire d'un corps fixe de colonne de direction alors que la partie mobile du contacteur et solidaire en rotation du volant de direction.

Le connecteur souple a couramment un aspect général de ruban dont la largeur est limitée par l'encombrement axial du contacteur. Le nombre de voies électriques du connecteur est donc limité, ceci d'autant plus que l'écartement entre deux voies électriques est généralement normalisé.

Or, il convient d'augmenter le nombre de voies électriques du contacteur tournant pour répondre à une augmentation des fonctions commandées par des moyens électriques raccordés à ce contacteur, telles que par exemple la commande d'un sac gonflable, d'un avertisseur sonore, d'un régulateur de vitesse ou d'un auto-radio.

L'invention a pour but d'augmenter le nombre de voies électriques disponibles sur un contacteur électrique tournant, du type précité, ceci sans modifier notablement l'encombrement de ce contacteur, notamment l'encombrement axial.

US 2002/019150 décrit un contacteur électrique tournant, du type comprenant :
- un corps annulaire et un rotor montés rotatifs l'un par rapport à l'autre autour d'un axe de rotation relatif, et
- des premier et second connecteurs souples destinés à s'enrouler sur le rotor, le second connecteur souple recouvrant sur au moins une partie de sa longueur le premier connecteur souple en suivant le trajet de ce premier connecteur autour du rotor, chaque connecteur souple étant muni d'une extrémité fixe solidaire en rotation du corps annulaire et d'une extrémité mobile.

L'invention a pour objet un contacteur électrique tournant, du type décrit dans US 2002/019150, **caractérisé en ce qu'**il comprend un moyeu annulaire d'entraînement du rotor, couplé en rotation au rotor par des moyens à engrenage, l'extrémité mobile de chaque connecteur souple étant solidaire en rotation du moyeu annulaire.

Le recouvrement des deux connecteurs souples permet d'augmenter le nombre de voies électriques du contacteur sans pour autant augmenter l'encombrement notamment axial, du contacteur. Par ailleurs, un contacteur tournant classique peut être facilement adapté pour recevoir les deux connecteurs souples qui se recouvrent.

Suivant d'autres caractéristiques non limitatives de ce contacteur :
- le rotor comporte un noyau annulaire d'enroulement des connecteurs, délimité par des surfaces radialement interne et externe au contact desquelles sont guidées des brins interne et externe de chaque connecteur, chaque connecteur s'étendant à travers une fente, dite de renvoi, qui interrompt circonférentiellement le noyau et qui est délimitée par un bord de renvoi des brins interne et externe du connecteur l'un vers l'autre ;
- le noyau annulaire comprend des première et seconde fentes de renvoi, décalées circonférentiellement, traversées respectivement par les premier et second connecteurs ;
- le noyau annulaire comprend une seule fente de renvoi commune aux deux connecteurs ;
- le contacteur comprend deux parties coaxiales, dites fixe et mobile, montées rotatives l'une par rapport à l'autre autour de l'axe de rotation relatif, formant un boîtier dans lequel sont logés le rotor et les connecteurs, l'extrémité fixe de chaque connecteur souple étant reliée à la partie fixe et l'extrémité mobile de chaque connecteur souple étant reliée à la partie mobile ;
- les positions angulaires autour de l'axe de rotation relatif des extrémités fixes des deux connecteurs sont sensiblement identiques et les positions angulaires autour de l'axe de rotation relatif des extrémités mobiles des deux connecteurs sont sensiblement identiques ;
- le moyeu annulaire d'entraînement du rotor est logé dans le boîtier ;
- la partie fixe comporte le corps annulaire du boîtier et la partie mobile comporte un couvercle annulaire de ce boîtier lié en rotation au moyeu annulaire ;
- les extrémités fixes des deux connecteurs sont portées par un support commun solidaire du corps et les extrémités mobiles des deux connecteurs sont portées par un support commun solidaire du couvercle.

L'invention a également pour objet un ensemble de direction de véhicule automobile, **caractérisé en ce qu'**il comprend un contacteur tel que défini ci-dessus. L'invention sera mieux comprise à la lecture de la description qui va suivre, donnée uniquement à titre d'exemple et faite en se référant aux dessins dans lesquels :
- les figures 1 et 2 sont des vues en perspective éclatée, suivant des points de vue différents, d'un contacteur électrique tournant pour véhicule automobile selon un premier mode de réalisation de l'invention ;
- la figure 3 est une vue en perspective éclatée d'un contacteur électrique tournant pour véhicule automobile selon un second mode de réalisation de l'invention.

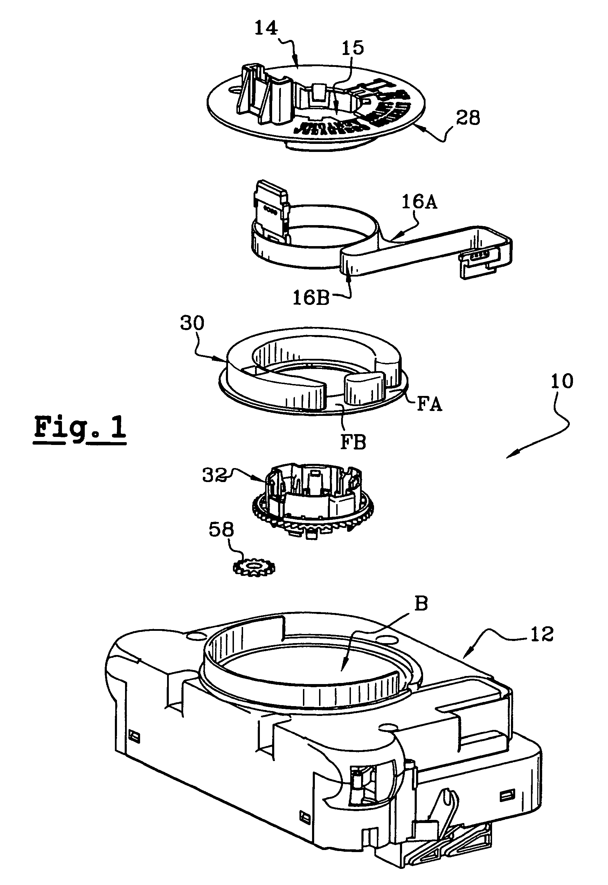

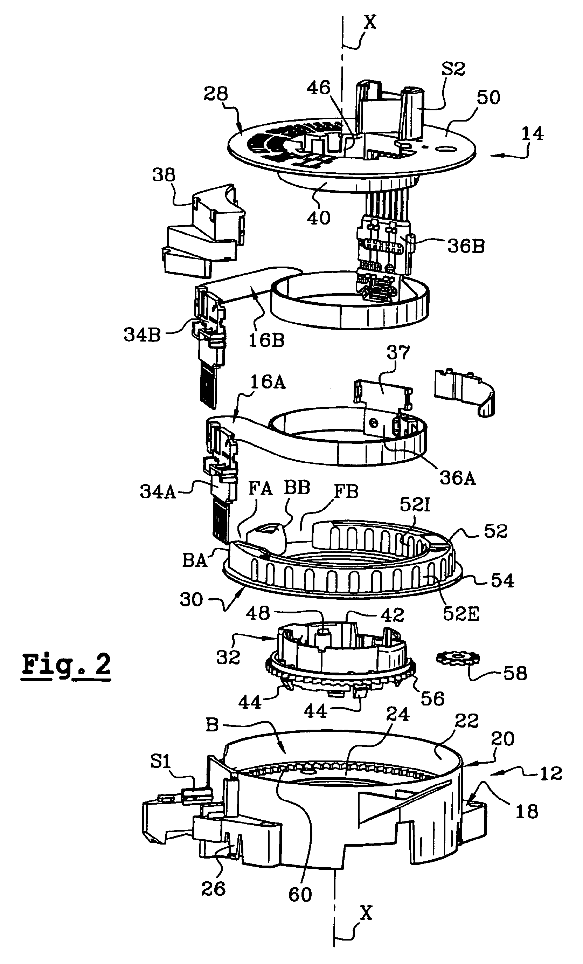

On a représenté sur les figures 1 et 2 un contacteur électrique tournant selon un premier mode de réalisation de l'invention, désigné par la référence générale 10. Ce contacteur 10 est destiné à être agencé dans un ensemble de direction de véhicule automobile.

Le contacteur électrique 10 comprend deux parties coaxiales montées rotatives l'une par rapport à l'autre, dites fixe 12 et mobile 14. Sur la figure 1, on a désigné par X l'axe de rotation de la partie mobile 14 par rapport à la partie fixe 12. Les parties fixe 12 et mobile 14 ont une forme générale annulaire délimitant un passage axial 15 traversant ces parties fixe 12 et mobile 14.

Les parties fixe 12 et mobile 14 forment un boîtier B, de forme générale annulaire, dans lequel sont logés deux connecteurs souples 16A, 16B. Ces connecteurs 16A, 16B ont chacun une forme générale de ruban de préférence en matériau synthétique surmoulé sur des voies électriques. Dans l'exemple illustré, les connecteurs 16A, 16B ont sensiblement la même largeur et le même nombre de voies électriques.

En se référant à la figure 2, on voit que la partie fixe 12 comprend une semelle 18 sur laquelle est venu de matière un corps 20 de boîtier. Ce corps 20 est délimité par une paroi axiale annulaire 22 et un fond 24 percé axialement. La semelle 18 est destinée à être accrochée sur un support lié à un corps de colonne de direction (non représenté) à l'aide de moyens classiques comprenant par exemple des pattes d'encliquetage 26.

La partie mobile 14 comprend un couvercle annulaire 28 de boîtier, un rotor 30 d'enroulement des connecteurs souples 16A, 16B, logé dans le boîtier annulaire B, et un moyeu annulaire 32 d'entraînement de ce rotor 30 par l'intermédiaire de moyens à engrenage qui seront décrits ultérieurement.

Chaque connecteur souple 16A, 16B comprend une première extrémité, dite fixe, reliée à un connecteur rigide fixe 34A, 34B porté par la partie fixe 12, et une seconde extrémité, dite mobile, reliée à un connecteur rigide mobile 36A, 36B porté par le couvercle 28 (le connecteur rigide mobile 36A n'est que partiellement représenté sur la figure 2).

Les connecteurs rigides fixes 34A, 34B sont emboîtés sur un support commun S1 venu de matière avec le corps 20. Les extrémités fixes des deux connecteurs souples 16A, 16B sont donc portées par un support commun solidaire du corps 20. On notera que les positions angulaires autour de l'axe X de ces extrémités fixes sont sensiblement identiques.

Par ailleurs, les connecteurs rigides mobiles 36A, 36B sont accrochés entre eux par un organe de liaison 37 et emboîtés dans un support commun S2 venu de matière avec le couvercle 28. Les extrémités mobiles des deux connecteurs souples 16A, 16B sont donc portées par un support commun solidaire du couvercle 28. On notera que les positions angulaires autour de l'axe X de ces extrémités mobiles sont sensiblement identiques.

Les connecteurs rigides fixes 34A, 34B sont protégés par un capot 38 accroché de façon connue en soi sur la partie fixe 12 (voir notamment figure 2). Le couvercle 28 et le moyeu 32 sont munis de jupes axiales d'emboîtement respectives 40, 42 séparant radialement l'intérieur du boîtier B d'avec le passage axial 15. Les jupes 40, 42 participent à l'entretoisement axial du couvercle 28 et du moyeu 32 ainsi qu'au centrage axial relatif de ces couvercle 28 et moyeu 32.

Le moyeu 32 est monté rotatif sur le fond 24 du corps 20 de boîtier à l'aide de moyens classiques comprenant, par exemple, des pattes axiales 44 d'encliquetage permettant une immobilisation axiale du moyeu 32 par rapport à la semelle 18 tout en autorisant la rotation de ce moyeu 32 par rapport à la semelle 18, autour de l'axe X (voir notamment figure 2).

Le couvercle 28 est accroché sur le moyeu 32 à l'aide de moyens classiques comprenant par exemple des pontets 46 dans lesquels sont emboîtées des pattes axiales 48 d'encliquetage (voir figure 2). Le couvercle 28 est donc solidaire en rotation avec le moyeu 32.

Le couvercle 28 est muni d'une joue radiale 50, solidaire de la jupe axiale 40, obturant axialement le boîtier B.

Le rotor 30 comporte un noyau annulaire 52 d'enroulement des connecteurs souples 16A, 16B prolongé par une collerette 54 d'appui du rotor 30 sur le fond 24 du corps de boîtier.

On notera que les connecteurs souples 16A, 16B se recouvrent sur au moins une partie de leur longueur en suivant un trajet commun autour du rotor 30.

Le moyeu 32 de contacteur est destiné à être couplé en rotation à un moyeu de volant non représenté sur les figures.

Par ailleurs, le moyeu 32 est couplé en rotation au rotor 30 par des moyens classiques à engrenage comprenant notamment, une denture externe 56, portée par le moyeu 32 et un pignon 58 monté rotatif sur un pivot (non représenté) porté par le rotor 30. Le pignon 58, engrenant avec la denture externe 56 et une denture interne 60 ménagée sur la partie fixe 12, forme des moyens à engrenage de type épicycloïdal permettant l'établissement d'un rapport de réduction entre le moyeu 32 et le rotor 30. Ainsi, le moyeu 32, muni de sa denture externe 56 forme un planétaire, la partie fixe 12 munie de la denture interne 60 forme une couronne à denture intérieure et le rotor 30 porte un satellite formé par le pignon 58.

Le noyau annulaire 52 est délimité par des surfaces radialement interne 521 et externe 52E au contact desquelles sont guidées des brins interne et externe de chaque connecteur 16A, 16B.

Chaque connecteur 16A, 16B s'étend à travers une fente FA, FB, dite de renvoi, qui interrompt circonférentiellement le noyau annulaire 52 et qui est délimitée sur ce noyau par un bord BA, BB de renvoi des brins interne et externe du connecteur 16A, 16B l'un vers l'autre.

On notera que les première FA et seconde FB fentes de renvoi, traversées respectivement par les premier 16A et second 16B connecteurs, sont décalées circonférentiellement entre elles. Ce décalage facilite le renvoi des brins interne et externe de chaque connecteur 16A, 16B en séparant localement les deux connecteurs 16A, 16B l'un de l'autre.

En ce qui concerne le fonctionnement du contacteur électrique tournant 10 selon l'invention, l'enroulement de chaque connecteur souple 16A, 16B sur le rotor 30 lors de la rotation relative des parties fixe 12 et mobile 14 du contacteur évolue de façon analogue à ce qui est décrit dans le document FR-A-2 772 195 relatif à un contacteur électrique tournant à connecteur souple unique. Le contenu du document FR-A-2 772 195 est incorporé par référence dans la présente description.

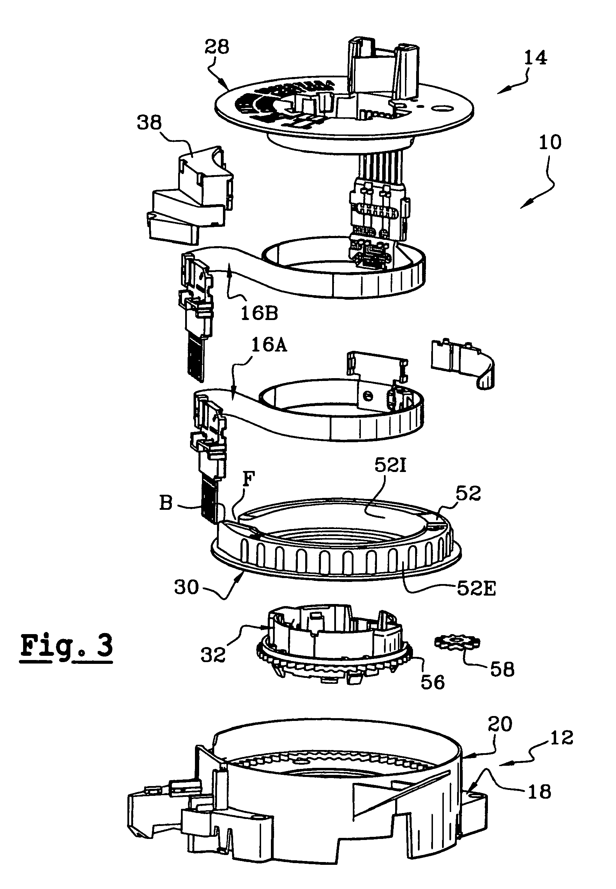

Sur la figure 3, on a représenté un contacteur électrique tournant selon un second mode de réalisation de l'invention. Sur cette figure, les éléments analogues à ceux des figures précédentes sont désignés par des références identiques.

Dans ce cas, le noyau annulaire 52 comprend une seule fente F de renvoi qui est commune aux deux connecteurs souples 16A, 16B et qui est délimitée sur ce noyau 52 par un bord B.

## Revendications

1. Contacteur électrique tournant, du type comprenant :
- un corps annulaire (20) et un rotor (30) montés rotatifs l'un par rapport à l'autre autour d'un axe de rotation relatif (X), et
- des premier et second connecteurs souples (16A, 16B) destinés à s'enrouler sur le rotor (30), le second connecteur souple (16A, 16B) recouvrant sur au moins une partie de sa longueur le premier connecteur souple (16A, 16B) en suivant le trajet de ce premier connecteur (16A, 16B) autour du rotor (30), chaque connecteur souple (16A, 16B) étant muni d'une extrémité fixe solidaire en rotation du corps annulaire (20) et d'une extrémité mobile,
**caractérisé en ce qu'**il comprend un moyeu annulaire (32) d'entraînement du rotor (30), couplé en rotation au rotor (30) par des moyens (56, 58, 60) à engrenage, l'extrémité mobile de chaque connecteur souple (16A, 16B) étant solidaire en rotation du moyeu annulaire (32).

2. Contacteur selon la revendication 1, **caractérisé en ce que** le rotor (30) comporte un noyau annulaire (52) d'enroulement des connecteurs (16A, 16B), délimité par des surfaces radialement interne (521) et externe (52E) au contact desquelles sont guidées des brins interne et externe de chaque connecteur (16A, 16B), chaque connecteur (16A, 16B) s'étendant à travers une fente (FA, FB; F), dite de renvoi, qui interrompt circonférentiellement le noyau (52) et qui est délimitée par un bord (BA, BB ; B) de renvoi des brins interne et externe du connecteur (16A, 16B) l'un vers l'autre.

3. Contacteur selon la revendication 2, **caractérisé en ce que** le noyau annulaire comprend des première (FA) et seconde (FB) fentes de renvoi, décalées circonférentiellement, traversées respectivement par les premier et second connecteurs (16A, 16B).

4. Contacteur selon la revendication 2, **caractérisé en ce que** le noyau annulaire (52) comprend une seule fente (F) de renvoi commune aux deux connecteurs (16A, 16B).

5. Contacteur selon l'une quelconque des revendications précédentes, **caractérisé en ce qu'**il comprend deux parties coaxiales, dites fixe (12) et mobile (14), montées rotatives l'une par rapport à l'autre autour de l'axe de rotation relatif (X), formant un boîtier (B) dans lequel sont logés le rotor (30) et les connecteurs (16A, 16B), l'extrémité fixe de chaque connecteur souple (16A, 16B) étant reliée à la partie fixe (12) et l'extrémité mobile de chaque connecteur souple (16A, 16B) étant reliée à la partie mobile (14).

6. Contacteur selon la revendication 5, **caractérisé en ce que** les positions angulaires autour de l'axe de rotation relatif (X) des extrémités fixes des deux connecteurs (16A, 16B) sont sensiblement identiques et les positions angulaires autour de l'axe de rotation relatif (X) des extrémités mobiles des deux connecteurs (16A, 16B) sont sensiblement identiques.

7. Contacteur selon la revendication 5 ou 6, **caractérisé en ce que** le moyeu annulaire (32) d'entraînement du rotor (30) est logé dans le boîtier (B).

8. Contacteur selon la revendication 7, **caractérisé en ce que** la partie fixe (12) comporte le corps annulaire (20) du boîtier et la partie mobile (14) comporte un couvercle annulaire (28) de ce boîtier lié en rotation au moyeu annulaire (32).

9. Contacteur selon la revendication 8, **caractérisé en ce que** les extrémités fixes des deux connecteurs (16A, 16B) sont portées par un support commun solidaire du corps (20) et les extrémités mobiles des deux connecteurs (16A, 16B) sont portées par un support commun solidaire du couvercle (28).

10. Ensemble de direction de véhicule automobile, **caractérisé en ce qu'il** comprend un contacteur (10) selon l'une quelconque des revendications précédentes.

## Claims

1. A rotary electrical contactor, of the type comprising:
· an annular body (20) and a rotor (30) mounted to rotate relative to each other about a relative rotation axis (X); and
· first and second flexible connectors (16A, 16B) for winding on the rotor (30), the second flexible connector (16A, 16B) covering, over at least a fraction of its length, the first flexible connector (16A, 16B), following the path of said first connector (16A, 16B) around the rotor (30), each flexible connector (16A, 16B) being provided with a movable end and with a stationary end constrained in rotation with the annular body (20);
the contactor being **characterized in that** it comprises an annular hub (32) for driving the rotor (30), coupled in rotation with the rotor (30) by gearing means (56, 58, 60), the movable end of each flexible connector (16A, 16B) being constrained in rotation with the annular hub (32).

2. A contactor according to claim 1, **characterized in that** the rotor (30) includes an annular core (52) for winding the connectors (16A, 16B) and defined by radially inner and outer surface having inner (521) and outer (52E) strands of each connector (16A, 16B) guided in contact therewith, each connector (16A, 16B) extending through a so-called return slot (FA, FB; F) that interrupts the core (52) circumferentially and that is defined by an edge (BA, BB; B) for returning the inner and outer strands of the connector (16A, 16B) towards each other.

3. A contactor according to claim 2, **characterized in that** the annular core has first and second return slots (FA, FB) that are circumferentially offset and that respectively pass the first and second connectors (16A, 16B).

4. A contactor according to claim 2, **characterized in that** the annular core (52) has a single return slot (F) common to both connectors (16A, 16B).

5. A contactor according to any preceding claim, **characterized in that** it comprises two coaxial portions, a stationary portion (12) and a movable portion (14), the portions being mounted to rotate relative to each other about the relative rotation axis (X), forming a housing (B) in which the rotor (30) and the connectors (16A, 16B) are housed, the stationary end of each flexible connector (16A, 16B) being connected to the stationary portion (12) and the movable end of each flexible connector (16A, 16B) being connected to the movable portion (14).

6. A contactor according to claim 5, **characterized in that** the angular positions around the relative rotation axis (x) of the stationary ends of the two connectors (16A, 16B) are substantially identical, and the angular positions around the relative rotation axis (X) of the movable ends of the two connectors (16A, 16B) are substantially identical.

7. A contactor according to claim 5 or claim 6, **characterized in that** the angular hub (32) for driving the rotor (30) is housed in the housing (B).

8. A contactor according to claim 7, **characterized in that** the stationary portion (12) comprises the annular body (20) of the housing, and the movable portion (14) comprises an annular cover (28) constrained in rotation with the annular hub (32).

9. A contactor according to claim 8, **characterized in that** the stationary ends of the two connectors (16A, 16B) are carried by a common support secured to the body (20), and the movable ends of the two connectors (16A, 16B) are carried by a common support secured to the cover (28).

10. A motor vehicle steering assembly, **characterized in that** it includes a contactor (10) according to any preceding claim.

## Patentansprüche

1. Elektrischer Drehkontaktor, umfassend:
- einen ringförmigen Körper (20) und einen Rotor (30), die in Bezug zueinander um eine relative Rotationsachse (X) drehbar montiert sind, und
- einen ersten und einen zweiten biegsamen Verbinder (16A, 16B), die dazu bestimmt sind, sich auf den Rotor (30) aufzurollen, wobei der zweite biegsame Verbinder (16A, 16B) zumindest auf einem Teil seiner Länge den ersten biegsamen Verbinder (16A, 16B) bedeckt, indem er der Bahn dieses ersten Verbinders (16A, 16B) um den Rotor (30) folgt, wobei jeder biegsame Verbinder (16A, 16B) ausgestattet ist mit einem ortsfesten Ende, das drehfest mit dem ringförmigen Körper (20) verbunden ist, und mit einem beweglichen Ende,
**dadurch gekennzeichnet, dass** er eine ringförmige Nabe (32) zum Antrieb des Rotors (30) umfasst, die bei Rotation an den Rotor (30) durch mit Zähnen besetzte Getriebemittel (56, 58, 60) gekoppelt ist, wobei das bewegliche Ende jedes biegsamen Verbinders (16A, 16B) drehfest mit der ringförmigen Nabe (32) verbunden ist.

2. Kontaktor nach Anspruch 1, **dadurch gekennzeichnet, dass** der Rotor (30) einen ringförmigen Kern (52) zum Aufrollen der Verbinder (16A, 16B) aufweist, der von einer radial inneren (521) und äußeren (52E) Fläche begrenzt ist, durch deren Berührung der innere und äußere Strang jedes Verbinders (16A, 16B) geführt werden, wobei sich jeder Verbinder (16A, 16B) durch einen Spalt (FA, FB; F), genannt Rückführungsspalt, erstreckt, der den Kern (52) umfangsmäßig unterbricht und der durch einen Rand (BA, BB; B) zur Rückführung des inneren und äußeren Strangs des Verbinders (16A, 16B) zueinander begrenzt ist.

3. Kontaktor nach Anspruch 2, **dadurch gekennzeichnet, dass** der ringförmige Kern einen ersten (FA) und einen zweiten (FB) Rückführungsspalt umfasst, welche umfangsmäßig versetzt sind, und welche jeweils vom ersten und vom zweiten Verbinder (16A, 16B) durchquert werden.

4. Kontaktor nach Anspruch 2, **dadurch gekennzeichnet, dass** der ringförmige Kern (52) einen einzigen Rückführungsspalt (F) umfasst, den sich die beiden Verbinder (16A, 16B) teilen.

5. Kontaktor nach einem der vorhergehenden Ansprüche, **dadurch gekennzeichnet, dass** er zwei koaxiale Teile, die als ortsfest (12) und beweglich (14) bezeichnet werden, umfasst, die in Bezug zueinander um die relative Rotationsachse (X) drehbar montiert sind, wobei sie ein Gehäuse (B) bilden, in dem der Rotor (30) und die Verbinder (16A, 16B) untergebracht sind, wobei das ortsfeste Ende jedes biegsamen Verbinders (16A, 16B) mit dem ortsfesten Teil (12) verbunden ist und das bewegliche Ende jedes biegsamen Verbinders (16A, 16B) mit dem beweglichen Teil (14) verbunden ist.

6. Kontaktor nach Anspruch 5, **dadurch gekennzeichnet, dass** die Winkelpositionen um die relative Rotationsachse (X) der ortsfesten Enden der beiden Verbinder (16A, 16B) im Wesentlichen identisch sind und die Winkelpositionen um die relative Rotationsachse (X) der beweglichen Enden der beiden Verbinder (16A, 16B) im Wesentlichen identisch sind.

7. Kontaktor nach Anspruch 5 oder 6, **dadurch gekennzeichnet, dass** die ringförmige Nabe (32) zum Antrieb des Rotors (30) im Gehäuse (B) untergebracht ist.

8. Kontaktor nach Anspruch 7, **dadurch gekennzeichnet, dass** das ortsfeste Teil (12) den ringförmigen Körper (20) des Gehäuses aufweist und das bewegliche Teil (14) einen ringförmigen Deckel (28) für dieses Gehäuse aufweist, der drehfest mit der ringförmigen Nabe (32) verbunden ist.

9. Kontaktor nach Anspruch 8, **dadurch gekennzeichnet, dass** die ortsfesten Enden der beiden Verbinder (16A, 16B) von einem gemeinsamen Träger getragen werden, der mit dem Körper (20) fest verbunden ist, und die beweglichen Enden der beiden Verbinder (16A, 16B) von einem gemeinsamen Träger getragen werden, der mit dem Deckel (28) fest verbunden ist.

10. Lenksäulenzusammenbau für ein Kraftfahrzeug, **dadurch gekennzeichnet, dass** er einen Kontaktor (10) nach einem der vorhergehenden Ansprüche umfasst.
